# EUROPEAN PATENT APPLICATION

(11) **EP 4 756 251 A1**
(43) Date of publication of application: **10.06.2026**
(21) Application number: 25215475.2
(22) Date of filing: 13.11.2025
(51) Int. Cl.: F16H 1/20, B60K 1/02, F16H 57/00, F16H 3/00, F16H 3/08, F16H 48/20, B60K 17/04

(54) **ELECTRIC AXLE FOR INDUSTRIAL OR COMMERCIAL VEHICLES**

(30) Priority: 05.12.2024 IT 202400027675
(71) Applicant: FPT Industrial S.p.A., 10156 Torino (IT)
(72) Inventor: PESOLA, Fabio, 10156 Torino (IT); ESPOSITO, Pietro, 10156 Torino (IT); CANTONE, Francesco, 10156 Torino (IT)
(74) Representative: Fiume, Orazio

(57) **Abstract**

Electric axle (EA) for industrial or commercial vehicles comprising a differential (DF) equipped with a crown gear (DFC) and two half-shafts (HS) to drive the rotation of the same number of vehicle wheels (W), a first electric machine (EM) having a first hollow drive shaft (PS), having a first end (PSa) on which a first wheel (1) is fixed, and in which, in the drive shaft, a transmission shaft (TS) is coaxially inserted having a first end (TSa) on which an output wheel (Wout) is fixed which meshes with the crown gear (DFC) of the differential, a hollow shaft (HWS) fitted on one of the two half-shafts (HS) of the differential having a first end (HWSa) proximal to the differential and a second end (HWSb) distal to the differential, in which a second wheel (2) is fixed on the first end (HWSa) which meshes with said first wheel (1), wherein a second wheel (2) is fixed on the second end (HWSb) by means of a first clutch device (S1), a third wheel (3) that engages with a fourth wheel (4) that can be connected, respectively, by means of a second clutch device (S2), or fixed with a second end (TSb), opposite the first end (Tsa), of the transmission shaft (TS).

## Description

### Field of the invention

The present invention relates to the field of electric propulsion systems, particularly in the field of industrial and commercial vehicles equipped with dual-motor electric axle drives.

The electric axle drive of the present invention belongs to the category of axles known as off-axis, in that the rotation axis of one or more electric propulsion machines is parallel but not coaxial with the axle shafts that define the axle.

### State of the art

Commercial and industrial vehicles are undergoing a massive electrification process, replacing internal combustion engines or integrating them with electric motors.

Industrial and commercial vehicles are designed to maximize cargo space, so one of the key aspects is the design of compact and robust axles.

Furthermore, these vehicles require significant torque/power, and to achieve this torque/power, transmissions must ensure a high gear ratio or the use of two electric motors.

It is therefore not easy to balance compactness and a high gear ratio, or the arrangement of two electric motors and the transmission, with respect to vehicle constraints.

More specifically, industrial and commercial vehicles require high axle efficiency at highway speeds, i.e., when there is a low reduction ratio between the revolutions of the electric motor shafts and the wheel hubs, thus limiting the number of wheels engaging as much as possible in this specific driving condition.

### Summary of the invention

The purpose of the present invention is to present a particularly compact single or dual-motor electric axle for industrial or commercial vehicles, capable of ensuring a high reduction ratio in one operating condition and high efficiency in another operating condition, when the reduction ratio is low.

The basic idea of the present invention is better expressed in the attached claim 1.

The first end of the drive shaft is proximal to the first end of the transmission shaft.

According to a preferred embodiment of the present invention, the electric machine is axially confined between a first plane, in which the first and second wheels lie, and a second plane, in which the third and fourth wheels lie.

Advantageously, three reduction stages are implemented between two axles only, the first associated with the halfshafts and the second with the driveshaft of the electric machine.

Advantageously, the wheels and any couplings are located at the ends of the electric machine, also allowing for easy maintenance and inspection.

It is evident that throughout this specification, the term "wheel" refers to a "toothed wheel" or gear.

The dependent claims describe preferred variants of the invention and form an integral part of this specification.

### Brief description of the figures

Further purposes and advantages of the present invention will be made clear from the following detailed description of an embodiment thereof (and its variants) and the accompanying drawings, which are provided purely for explanatory and non-limiting purposes, in which:
Fig. 1 shows a first example of an electric axle drive according to the present invention, completely devoid of couplings, so that the wheels are all fixed on their respective support shafts;
Fig. 2 shows another example of the invention, featuring a first coupling capable of making a first or second fourth wheel rotationally integral with the drive shaft, respectively meshing with a first and second third wheel fixed to the hollow shaft;
Fig. 3 shows another example of an electric axle drive according to the invention, featuring a first coupling for connecting/disconnecting the third wheel from the respective hollow shaft and a second coupling for connecting/disconnecting the drive shaft to the coaxial and internal drive shaft.

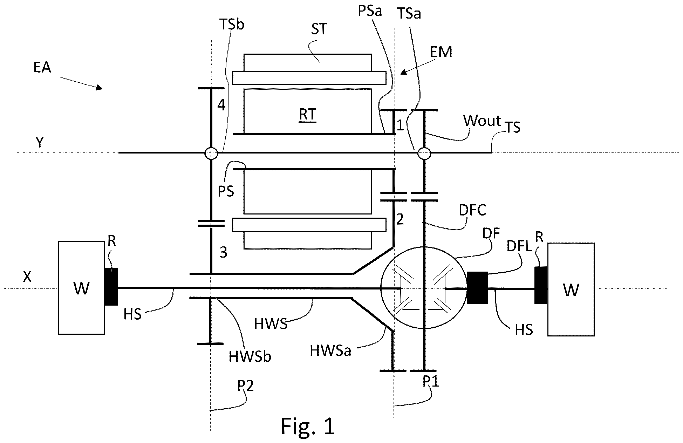

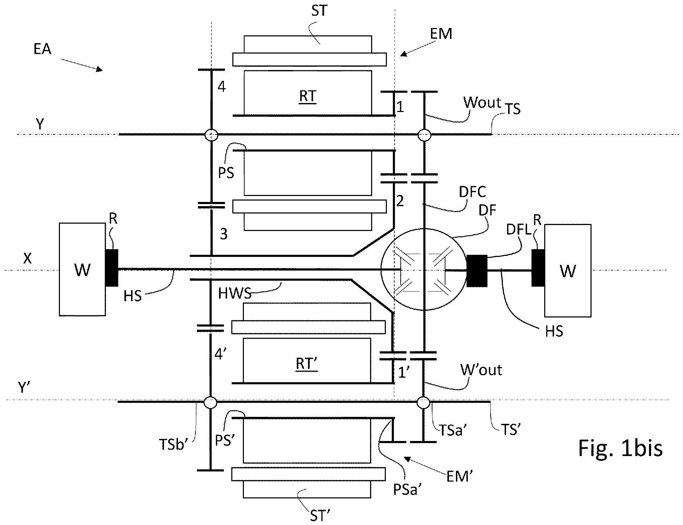

Figs. 1bis, 2bis, and 3bis show variants with two electrical machines corresponding to the variants in Figures 1, 2, and 3, respectively.

Since the components of the second electrical machine mirror the components of the first electrical machine with respect to the X-axis, they are indicated with identical reference marks with superscripts "'".

The same reference numbers and letters in the figures identify the same elements or components or functions.

It should also be noted that the terms "first," "second," "third," "upper," "lower," and the like may be used here to distinguish various elements. These terms do not imply a spatial, sequential, or hierarchical order for the modified elements unless specifically indicated or inferred from the text.

The elements and features illustrated in the various preferred embodiments, including the drawings, may be combined with each other without departing from the scope of protection of this application as described below.

### Detailed description of preferred embodiments

The figures show examples of the present invention of an off-axis drive axle EA.

The hollow drive shaft PS of the electric motor is parallel but not coaxial with the axle, whose axis of development X is indicated by the half-shafts HS and the vehicle wheels W.

The half-shafts converge in the differential DF, to which a crown gear DFC is attached.

Preferably, the differential is arranged laterally, meaning that the half-shafts have different lengths, so as to more easily accommodate the electric machine, which is offset with respect to the differential.

The electric machine comprises, as is known, a stator ST supported by a suitable container (not shown) and a rotor RT, in which the rotor is attached to a hollow drive shaft PS.

A transmission shaft TS is inserted into the drive shaft so that both opposite ends of the drive shaft emerge from the drive shaft of the electric machine.

The transmission shaft supports, at a first end, an output gear Wout that meshes with the crown gear DFC of the differential DF.

A fourth gear, 4, 4a, can be fixed or connectable to the second end TSb of the transmission shaft TS, opposite to the first end TSa.

This fourth gear receives motion from the electric motor, which passes through a hollow shaft HWS fitted to one of the two axle shafts of the differential.

The hollow shaft HWS has a first end HWSa, proximal to the differential, and a second end HWSb opposite the first end and distal to the differential. Fixed to the first end HWSa is a second gear 2 that meshes with the first gear 1 and has a second end, opposite the first end, connected or connectable to a third gear 3, 3a that meshes with the fourth gear 4, 4a. The third gear is connectable or fixed to the hollow shaft HWS.

The drive shaft PS and the transmission shaft TS identify a Y axis parallel to the X axis.

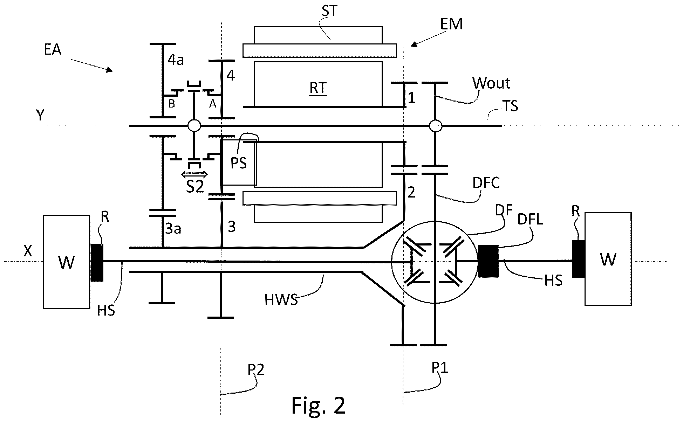

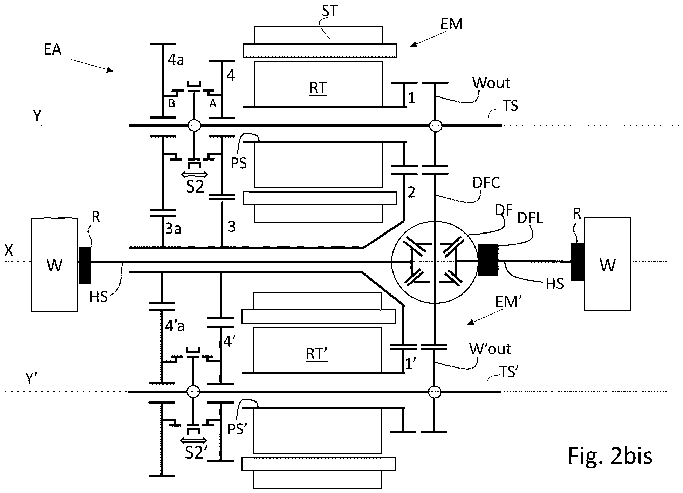

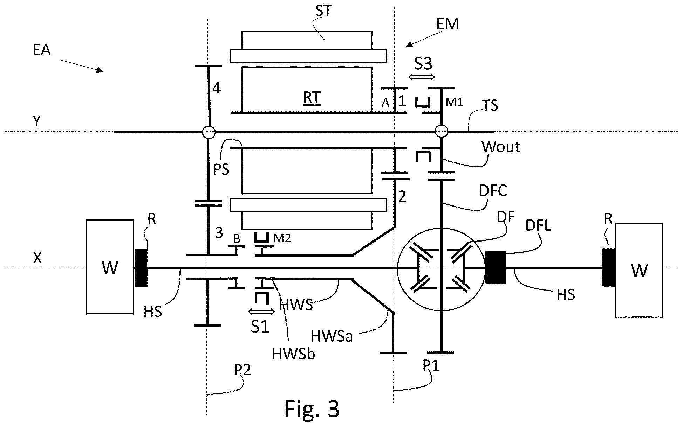

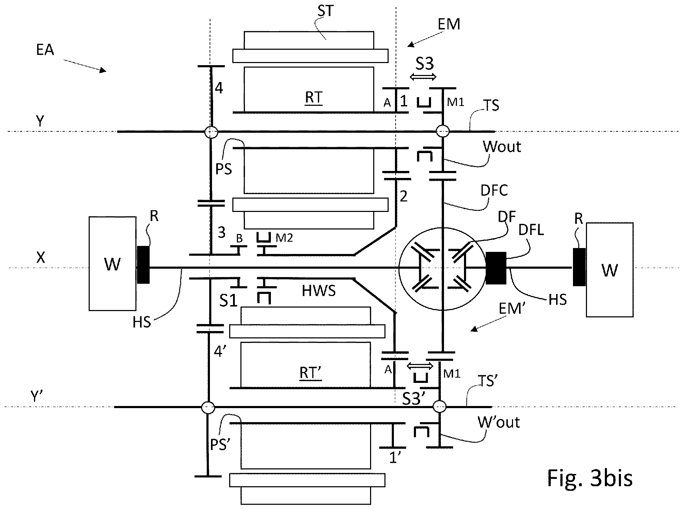

It is worth noting that there are at least three gear meshings between the X and Y axes, allowing the overall dimensions to be contained within a plane identified between the X and Y axes of the drive axle, despite the possible presence of couplings and complications that allow for two or more gears (see figures 2 and 3).

It should be noted that where the fourth gear can be connected to the transmission shaft TS, then the third gear is fixed on the hollow shaft HWS. Conversely, when the fourth gear is fixed on the transmission shaft TS, then the third gear can be connected to the hollow shaft HWS. For this purpose, the term "respectively" is used.

It's worth noting that the term "connectable" implies the presence of a clutch, so "connectable" should not be interpreted as "potentially connectable" but rather as a wheel rotatably supported on a respective shaft that can be locked from rotation relative to the shaft itself by the effect of an implicitly present S1, S2, or S3 clutch.

As it will be seen below, the clutch can be a quick-release type, with front teeth, or a radial type known as a "dog clutch," which allows a wheel to be selected by making it integral for rotation with the respective shaft. This clutch can also be of the friction cone type, or any type of clutch device that includes discs coated with friction material.

When the clutch mechanism includes friction-coated disc clutches, gear changes can occur in a power-shift manner, i.e., without interrupting the torque flowing through the clutch mechanism itself. Therefore, two clutch mechanisms can be partially closed simultaneously without interrupting the transmission.

According to a preferred embodiment of the present invention, the electric motor is axially confined between a first plane P1, in which the first wheel 1 and the second wheel 2 lie, and a second plane P2, in which the third and fourth wheels lie. The first and second planes are parallel to each other and perpendicular to the X direction of development of the axle EA of the present invention.

Advantageously, the wheels and any clutches are arranged at the ends of the electric motor, also allowing for easy maintenance and inspection.

Fig. 1 shows a version of the axle according to the present invention, without clutches and therefore with a fixed overall transmission ratio between the electric motor and the differential ring gear. Advantageously, the overall transmission ratio is configured to achieve a ratio of reduction in revolutions and increase in torque between the input and output wheels of the rotational motion.

According to the invention, the first wheel 1 is fixed to the first end PSa of the drive shaft PS, the wheel 3 is fixed to the second end HWSb of the hollow shaft HWS, and the wheel 4, which meshes with the wheel 3, is fixed to the second end TSb of the drive shaft TS.

It is clearly noted that the output wheel Wout and the first wheel 1 are side by side and in this variant, as in the variants of Figs. 2 and 3, they are not directly interconnected, being fixed on different shafts.

The second variant, shown with the aid of Fig. 2, includes a clutch S2 capable of selectively locking one of the two wheels 4 and 4a from rotation with the drive shaft TS. The clutch S2 is also designed to create a disconnected or neutral configuration of the electric machine with respect to the W wheels.

The wheels 4 and 4a mesh with the respective fixed wheels 3 and 3a that rotate with the HWS hollow shaft.

The third variant, illustrated in Fig. 3, includes a clutch S1 for connecting or disconnecting the third gear 3 with respect to the hollow shaft HWS, while another clutch S3 is designed to disconnect or connect the first gear and thus the drive shaft PS with the fixed output gear Wout with the drive shaft TS. The operation of clutch S1 alternates with the operation of clutch S3, meaning that when S3 is active, interconnecting the first gear with the output gear, the other clutch S1 is in the disconnected state and vice versa.

It can therefore be stated that the two selection devices can only be active alternately.

The operation of variants 1 - 3, at least in one operating condition, which is the only one for the variant shown in Fig. 1, requires the driveshaft to rotate the hollow shaft through the coupling of wheels 1 and 2.

The hollow shaft HWS rotates the driveshaft TS via wheels 3 and 4, or 3a and 4a according to the solution shown in Fig. 2.

The transmission shaft TS therefore supports the output wheel Wout, which engages with the differential ring gear DFC, rotating the vehicle wheels connected to the respective half-shafts HS and the differential unit DF.

The differential DF can be of the bevel-planetary and planetary type or of the open epicyclic type and can be equipped with slip control systems.

In the variant shown in Fig. 1, the total transmission ratio is given by the product of the individual transmission ratios achieved between wheels 1 and 2, 3 and 4, and Wout and DFC, thus effectively creating a single-speed transmission. Varying this overall transmission ratio can be achieved cost-effectively by simply varying one pair of the six gears in the transmission, leaving all other components unchanged.

This variant shown in Fig. 1, lacking any disconnecting elements, keeps the electric machine always connected to the wheels. Therefore, the vehicle sailing function is not possible. Furthermore, towing the vehicle causes the electric machine to rotate, resulting in friction and inertia. Furthermore, in the event of damage to the electric machine that causes the rotor to lock in place with respect to the stator, since the transmission lacks any disconnecting systems, towing the vehicle is possible only by lifting the wheels of the locked axle drive.

Fig. 1bis shows a variant with two electric machines, in which the second electric machine is connected to the differential in a mirror image of the first electric machine with respect to the X axis.

In this dual-motor variant, the transmission ratios achieved by the second machine with the wheels connected to it can be the same as the transmission ratios achieved with the wheels connected to the first electric machine, thus benefiting production savings by effectively duplicating the components used. The same economic advantage can be achieved by using the same type of electric machine between the two branches.

If necessary, both the two electric machines and the wheels connected to them can be differentiated to obtain a different distribution of transmission ratios between the wheels in the system. The electric machines can be differentiated in terms of their performance (torque, power, and rotation speed) and in terms of their overall dimensions. Finally, the center distance (i.e., the distance between the Y and Y' axes) can also be the same or different to better differentiate the diameters and therefore the transmission ratios achieved between the gears connected to the electric machines. These considerations regarding wheels, electric machines, and wheelbases can also be extended to the variants in Figs. 2bis, 3bis.

In the variant of Fig. 2, the clutch S1 allows the transmission ratio between the hollow shaft and the drive shaft to be varied using the two torques 3a/4a and 3/4. However, the torque path from the electric machine to the wheels is unchanged, similar to the diagram in Fig. 1, unless the clutch S1 interrupts the interconnection of the electric machine with the differential, creating a neutral condition. This neutral condition can therefore be advantageously exploited to introduce the sailing functions while the vehicle is moving and also allows the vehicle to be towed with the electric machine disconnected.

The torque flows in the variant shown in Fig. 2 are realized through wheels 1-2, 3-4 and Wout-DFC or 1-2, 3rd-4th and Wout-DFC, resulting in two different overall transmission ratios.

The solution shown in Figs. 2bis, featuring two electric motors coupled to the differential in a mirror image, is evidently equipped with two clutches S1 and S1' arranged on the Y and Y' axes, where the Y' axis is identified by the drive shaft PS' of the second electric motor EM'.

The gears of the second motor can be identical to the wheels of the first electric motor.

By varying the dimensions of the wheels W'out, 1', 4', and 4'a, it is possible to obtain four distinct gear ratios. Evidently, electric motors can work in parallel to increase the power available to the wheels, albeit with different gear ratios, or they can work alternately, increasing efficiency in conditions where the vehicle does not require high power performance by effectively disconnecting one of the two electric motors.

In the solution shown in Fig. 3, a second gear ratio is achieved by reversibly interconnecting the drive shaft with the propeller shaft. In this way, the HWS hollow shaft, and therefore the 3/4 torque, is completely bypassed.

Conveniently, the highest overall reduction ratio is achieved when the torque passes through wheels 1 - 2, 3 - 4, and then Wout-DFC, useful for starting off, while the lowest reduction ratio is achieved with S3 closed and S1 open, where the torque passes exclusively through the meshing of the Wout-DFC wheels.

Conveniently, the lower reduction ratio involves only one gear, benefiting the efficiency of the axle drive, especially during high-speed highway driving, which for an industrial or commercial vehicle is the condition that most impacts fuel consumption during long-distance travel.

Observing Fig. 1-3, it is clear that at least in one operating condition, the drive torque path follows a clockwise circular path with respect to the differential, involving in sequence:
- drive shaft,
- hollow shaft,
- propeller shaft,
- differential.

In the diagram of Fig. 3, the drive shaft PS can therefore be directly connected to the transmission shaft TS, bypassing the HWS hollow shaft.

Comparing Figs. 2 and 3, it is clear that if wheel 4 can be connected to the transmission shaft TS, then wheel 3 is fixed to the hollow shaft HWS, and vice versa. If wheel 4 is fixed to the transmission shaft TS, then wheel 3 can be connected to the hollow shaft HWS.

Fig. 3bis shows the variant of Fig. 3 with two electric machines EM and EM', arranged mirror-image with respect to the X-axis. In this variant, clutch S1 can be closed as an alternative to clutches S2 and S2', therefore the hidden-shift function is not possible. However, at highway speeds, when clutch S1 is open, clutch S2' can also be open, thus using only one electric machine, increasing efficiency by excluding one electric machine and effectively minimizing consumption.

According to the diagram in Fig. 2bis, the electric axle is equipped with two and four clutches respectively and can operate while the two electric machines are connected to the common differential using different transmission ratios.

This option is advantageous in avoiding the simultaneous disconnection of both electric machines during gear changes.

For both the single-electric and dual-electric versions, as per the variants in Figs. 2 and 3, the sailing function can also be implemented. This involves disconnecting one or both electric machines, thus reducing mechanical losses due to the drag of the transmission components when no torque is required at the wheels while the vehicle is in motion.

Finally, the vehicle towing function can be implemented using the engagement and disconnection systems of the engagement devices, in which one or both electric machines are disconnected from the differential, thus allowing easier towing without the rotation of the electric machines and with a more limited number of rotating components pertaining to the transmission, which is effectively in neutral with respect to the vehicle wheels W.

Any of the schemes shown here can be equipped with a differential lock device DFL and/or an additional portal or epicyclic wheel speed reducer R for each of the half-shafts HS.

The differential lock, which falls within the scope of the prior art and is therefore not shown, operates on one of the two HS half-shafts, connecting or disconnecting it to the differential housing via a sliding sleeve.

A differential disconnection unit may also be provided that intervenes by opening one of the HS half-shafts, which falls within the scope of the prior art and is therefore not shown.

The electric machines can function as both a motor and a generator, recovering kinetic energy during braking, either individually or in combination in the case of the two-electric machine versions.

In the variants shown in Figures 2bis and 3bis, using the S1 and S3, S3' clutch systems, propulsion by only one of the two electric machines is always possible, allowing the vehicle to move even in the event of a failure of one of the two motors, albeit with reduced performance due to the lower available power.

These functions can be particularly appreciated in military vehicles or emergency vehicles.

Implementation variations to the non-limiting example described are possible, without departing from the scope of protection of the present invention, including all embodiments equivalent to the claims for a person skilled in the art.

From the above description, a person skilled in the art is able to implement the invention without introducing further construction details.

## Claims

1. Electric axle (EA) for industrial or commercial vehicles comprising
- a differential (DF) equipped with a crown gear (DFC) and two half-shafts (HS) to rotate the same number of vehicle wheels (W),
- a first electric machine (EM) having a first hollow drive shaft (PS), having a first end (PSa) to which a first wheel (1) is fixed, and in which, in the drive shaft, is inserted coaxially
- a transmission shaft (TS) having a first end (TSa) to which an output wheel (Wout) is fixed which meshes with the crown gear (DFC) of the differential,
- a hollow shaft (HWS) fitted onto one of the two half-shafts
(HS) of the differential having a first end (HWSa) proximal to the differential and a second end (HWSb) distal to the differential, wherein a second wheel (2) is fixed to the first end (HWSa) which meshes with said first wheel (1), in which the second end (HWSb) is fixed or connectable, by means of a first engagement device (S1), a third wheel (3) which meshes with a fourth wheel (4) respectively connectable, by means of a second engagement device (S2), or fixed, with a second end (TSb), opposite the first end (Tsa), of the drive shaft (TS).

2. Axle according to claim 1, wherein the electric machine is axially confined between a first plane (P1), identified by the first and second wheels (1, 2), and a second plane (P2), identified by the third and fourth wheels (3, 4).

3. Axle according to any of the preceding claims, wherein the first wheel (1) is adjacent to the output wheel (Wout) and the second wheel (2) is adjacent to the crown (DFC) of the differential.

4. Axle according to any of the preceding claims, wherein
- the third wheel (3) is fixed to the second end (HWSb) of the hollow shaft (HWS) and
- the fourth wheel (4) is fixed to the second end (TSb) of the first transmission shaft (TS).

5. Axle according to any of claims 1 - 4, wherein
- the third wheel (3) is fixed to the second end (HWSb) of the hollow shaft (HWS) and
- the fourth wheel (4) is rotatably associated with the second end (TSb) of the transmission shaft (TS) and further comprises
- a further third wheel (3a) fixed to the second end (HWSb) of the hollow shaft (HWS) and
- a further fourth wheel (4a) rotatably associated with the second end (TSb) of the first drive shaft (TS)
- and wherein said second engagement device (S2) is positioned between the fourth wheel (4) and the further fourth wheel (4a) and is capable of selectively locking said fourth wheel (4) or further fourth wheel (4a) from rotation with said transmission shaft (TS).

6. Axle according to any of claims 1 - 3, wherein
- the third wheel (3) is rotatably associated and connectable with the second end (HSWb) of the hollow shaft (HWS) and the fourth wheel (4) is fixed with the second end of the transmission shaft (TS)
and further comprises
- a third engagement device (S3) capable of rotatably connecting said first wheel (1) to said output wheel (Wout),
wherein said first engagement device (S1) and said third engagement device (S3) are configured to be active exclusively alternately, so as to obtain two different transmission ratios.

7. Axle according to any of the preceding claims 1 - 6, wherein said first and/or second and/or third engagement devices (S1, S2, S3) are capable of defining a neutral or neutral configuration.

8. Axle according to claim 7, wherein said first and/or second engagement devices comprise a dog clutch quick-release coupling or a synchronized friction cone engagement.

9. Axle according to claim 8, wherein said first, second, and third engagement devices are synchronized friction cone engagement and configured to perform a power-shift function, such that both the first and second engagement devices or the first and third engagement devices are temporarily partially closed.

10. Axle according to any of the preceding claims, wherein said differential is arranged laterally with respect to the electric machine such that a first axle shaft is longer than a respective second axle shaft and wherein said electric machine is therefore adjacent to said first axle shaft.

11. Axle according to any of the preceding claims, wherein said drive shaft (PS) and said transmission shaft (TS) identify a first development axis (Y) and said half-axles (HS) and said hollow shaft (HWS) identify a second development axis (X) and wherein a larger dimension of the axle is contained in a plane identified by said first and second development axes.

12. An axle according to any preceding claim, further comprising a second electric machine (EM') having a second hollow drive shaft (PS'), having a first end (PSa') to which a further first wheel (1') is fixed, and in which, in the second drive shaft, a coaxially inserted
- a second transmission shaft (TS') having a first end (Tsa') to which a second output wheel (W'out) is fixed which meshes with the differential ring gear (DFC),
wherein the third wheel (3) also meshes with a further fourth wheel (4') respectively connectable, by means of a further second engagement device (S2'), or fixed with a second end (TSb'), opposite the first end (Tsa'), of the second transmission shaft (TS').

13. An axle according to any preceding claim, wherein said differential is equipped with a locking device (DFL) capable of mutually locking said two half-shafts (HS) from rotation relative to the differential housing (DF).

14. An axle according to any preceding claim, wherein each of said two half-shafts is equipped with an additional portal or epicyclic wheel reduction gear (R).

15. An industrial or commercial vehicle comprising an electric axle according to any of claims 1-14.
